Europäisches Patentamt

European Patent Office

Office européen des brevets

(11) Veröffentlichungsnummer: **0 059 409**
**B1**

(12) **EUROPÄISCHE PATENTSCHRIFT**

(45) Veröffentlichungstag der Patentschrift:
21.05.86

(21) Anmeldenummer: 82101348.9

(22) Anmeldetag: 23.02.82

(51) Int. Cl.⁴: **B 62 D 49/06,** A 01 B 59/043,
B 62 D 49/02, B 60 K 17/28

(54) Kraftfahrzeug, insbesondere Ackerschlepper.

(30) Priorität: 26.02.81 DE 3107228

(43) Veröffentlichungstag der Anmeldung:
08.09.82 Patentblatt 82/36

(45) Bekanntmachung des Hinweises auf die Patenterteilung:
21.05.86 Patentblatt 86/21

(84) Benannte Vertragsstaaten:
AT DE FR GB IT SE

(56) Entgegenhaltungen:
EP - A - 0 004 232
EP - A - 0 015 795
AU - A - 508 925
DE - A - 1 065 281
DE - A - 2 653 299
DE - A - 2 804 129
DE - A - 2 852 773
DE - A - 2 900 866
FR - A - 2 123 273
US - A - 3 612 574
US - A - 3 826 392

(73) Patentinhaber: DEERE & COMPANY, 1 John Deere Road, Moline Illinois 61265 (US)

(72) Erfinder: Weiss, Heinz, Dipl.-Ing., Volkerstrasse 24, D-6140 Bensheim (DE)

(74) Vertreter: Feldmann, Bernhard et al, DEERE & COMPANY European Office, Patent Department Steubenstrasse 36-42 Postfach 503, D-6800 Mannheim 1 (DE)

## Beschreibung

Die Erfindung betrifft ein Kraftfahrzeug für industrielle und/oder landwirtschaftliche Arbeiten, insbesondere Ackerschlepper, mit einem an seinem Chassis befestigten und durch mindestens einen hydraulischen Arbeitszylinder gesteuert verschwenkbaren, in seiner Normalposition etwa vertikal angeordneten Hubrahmen sowie einem zweiten Rahmen (Hubbalken), der entlang dem ersten Rahmen mittels eines vorzugsweise hydraulischen Kraftantriebes stufenlos höhenverstellbar ist und mindestens eine Kupplungseinrichtung trägt.

Ein solches Kraftfahrzeug ist - ausgebildet als Portalschlepper mit einer Dreipunktaufhängung - aus der DE-A- 28 04 129 bekannt geworden. Weitere Kupplungseinrichtungen sind bei dem gegenüber dem ersten Rahmen (Hubrahmen) verschiebbaren zweiten Rahmen dort nicht vorgesehen. Die vorbekannte Lösung bleibt somit im Hinblick auf ein vielseitig einsetzbares Kraftfahrzeug obengenannter Art unbefriedigend, denn mit einem erheblichen konstruktiven Aufwand wird nicht mehr als eine bedienungsfreundliche Verstellbarkeit der Dreipunktkupplung erreicht.

Der Erfindung liegt nun die Aufgabe zugrunde, die vorliegende Konstruktion unter Verwendung des verschwenkbaren Hubrahmens als Basis für eine Integration wesentlicher und insbesondere für ein landwirtschaftliches Kraftfahrzeug benötigter Kupplungseinrichtungen vorzusehen. Dabei sollte die Ankupplung der Arbeitsgeräte rasch und sicher von einer Bedienungskraft erfolgen können und auch solche Geräte einschließen, die eigene Antriebe benötigen. In den einzelnen Höhenpositionen sollten die Arbeitsgeräte belastbar sein, ohne die Gefahr eines unbeabsichtigten Absenkens unter dem Einfluß der Schwerkraft.

Diese Aufgabe wird ausgehend von einem Kraftfahrzeug der eingangs genannten Art dadurch gelöst, daß die für die Aufhängung bzw. Ankupplung einschließlich Antreiben der Arbeitsgeräte benötigten Elemente, nämlich Dreipunkt-Gerätekupplung, mindestens eine Anhängerkupplung mit Zugmaul sowie weitere mechanische, hydraulische und elektrische Schnellkuppelelemente und gegebenenfalls eine Gerätezapfwelle, in dem zweiten Rahmen in einer vorbestimmten Position zueinander integriert sind und daß der zweite Rahmen in vorgebbaren Höhenpositionen mechanisch gegenüber dem Hubrahmen verriegelbar ist.

Bei einer bevorzugten Ausführungsform der Erfindung sind zusätzliche Mittel zum lösbaren Befestigen einer Schaufel und/oder von Hubgabeln an den zweiten Rahmen vorgesehen.

Damit ist eine universelle Einrichtung geschaffen, an die sich zahlreiche industrielle und/oder landwirtschaftliche Arbeitsgeräte rasch und sicher anschließen sowie betreiben lassen, wobei eine solche verschwenk- und höhenverstellbare Rahmenkonstruktion grundsätzlich an der Vorder- und/oder Rückseite des Fahrzeugs angebracht werden kann.

Weitere vorteilhafte Ausführungsformen der Erfindung sind in den Unteransprüchen gekennzeichnet.

Aus der DE-A- 28 52 773 sind Anregungen für eine spezielle Ausgestaltung eines Hubrahmens mit zweitem Rahmen zu entnehmen, wobei der Kraftantrieb über zwei synchronisierte Hydraulikzylinder erfolgt, welche eine plattenförmige Kupplungshalterung in U-förmigen Führungsschienen des Hubrahmens in vertikaler Richtung bewegen. Weitere Kupplungsvorrichtungen sowie eine Verriegelung sind nicht vorgesehen, ebensowenig eine Verschwenkbarkeit des Hubrahmens. Bezüglich letzterer sei noch auf die DE-A- 18 13 930 verwiesen, wo ein Verschwenken der z. B. mit Hubgerät bestückten Rahmen mittels Druckzylinder erfolgt. Diese bekannten Ausbildungen sind auch im Rahmen der vorliegenden Konstruktion verwendbar.

Ferner ist aus der DE-A- 29 00 866 eine automatische An- und Abkupplungsvorrichtung mit teleskopierbaren Aufnahmehubarmen, die die Kuppelplatte geräte- oder anhängerseitig aufnehmen, anheben und geradlinig mit exakter Führung kuppeln, bekannt, bei der im Verbund mit der Kuppelplatte schlepperseitig eine Befestigungsvorrichtung angebracht ist, in der die Lagerwelle des Hub- und Fangarmes lagert. Bei dieser bekannten Vorrichtung wird eine Kuppelplatte verwendet, die nicht für schwere Anhänger und nicht für die Anbringung von Gabelstaplervorrichtungen geeignet ist. Der während des Kupplungsvorganges bewegte Aufnahmehubarm übt auf den mit dieser Kupplungsvorrichtung versehenen Schlepper bei hohen Gewichten eine derartige Kraft aus, daß die Gefahr eines Kippens des Schleppers besteht. Ferner ist es bei dieser Kupplungsvorrichtung nicht möglich, die Kupplungsplatte in vorgebbaren verschiedenen Höhenpositionen zu verriegeln, es ist nur eine einzige Höhenposition der Kuppelplatte im Betrieb möglich.

Im folgenden wird die Erfindung anhand eines Ausführungsbeispiels näher erläutert, aus dem sich weitere Vorteile und Merkmale der Erfindung ergeben.

In der zugehörigen Zeichnung zeigt
Figur 1 eine perspektivische Gesamtansicht,
Figur 2 eine Seitenansicht mit eingesetzten Hubgabeln und
Figur 3 den höhenverstellbaren zweiten Rahmen mit Schnellkuppelelement.

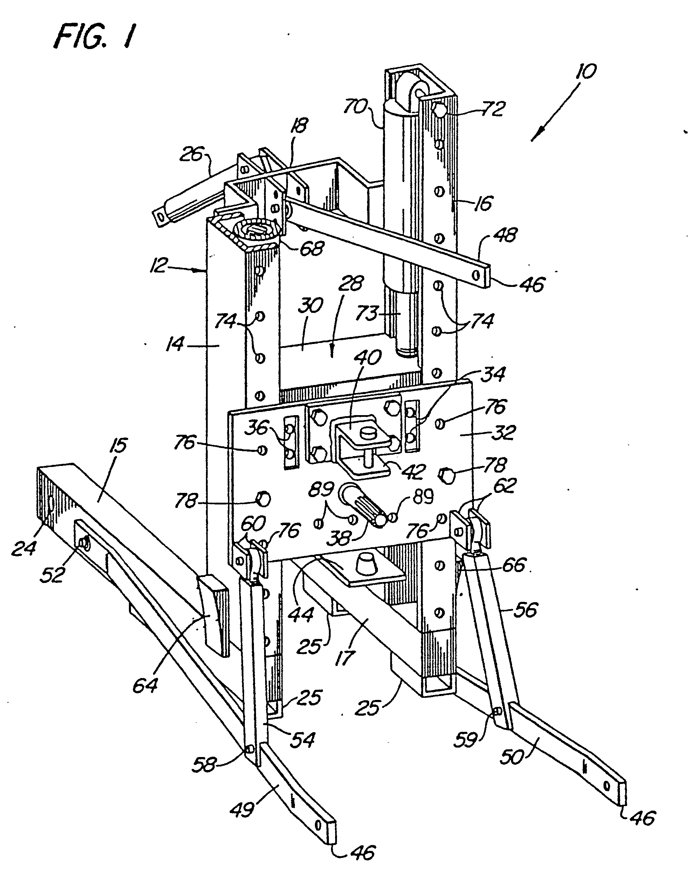

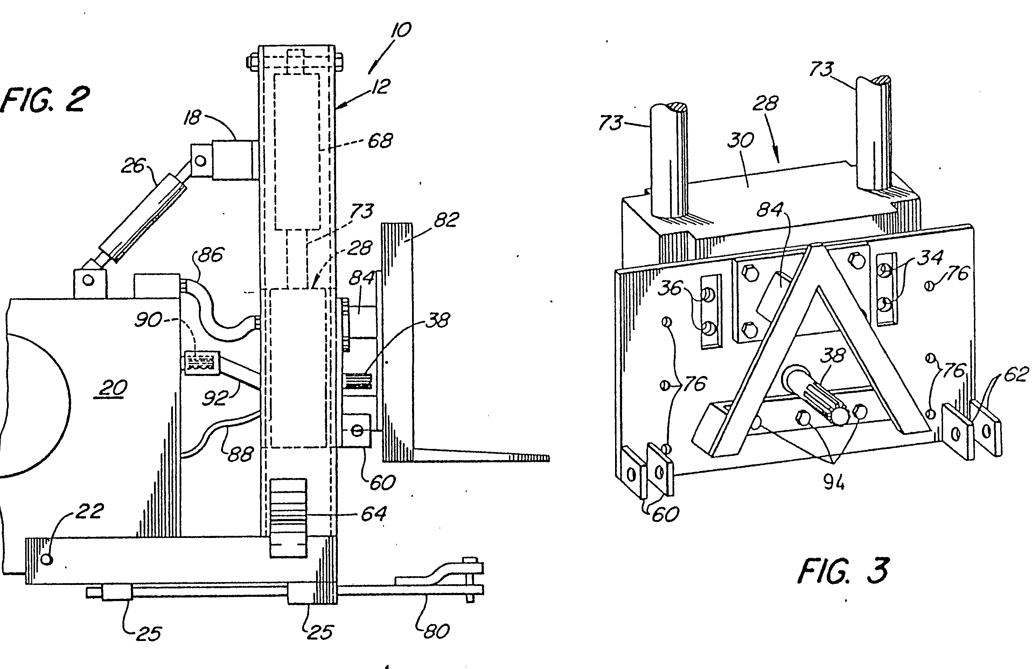

Figur 1 zeigt eine perspektivische Ansicht der erfindungsgemäßen Einrichtung von schräg hinten. Das dargestellte Zusatzgerät 10 weist den gesteuert verschwenkbaren, in seiner Normalposition etwa vertikal angeordneten Hubrahmen 12 auf, der im wesentlichen aus zwei U-Profilen 14 und 16 besteht, die ihrerseits wieder an den horizontalen Schenkeln 15 und 17 angeschweißt sind. Die beiden U-Profile weisen mit ihren offenen Seiten zueinander und sind in ihrem oberen Bereich durch die Traverse 18 miteinander verbunden. Die horizontalen Schenkel 15 und 17 sind an den jeweiligen Seiten des Fahrzeugchassis 20 mittels eines Stiftes 22 befestigt (vgl. Figur 2). Die Stifte 22 reichen durch die kreisförmige Öffnung 24, die an einem der Enden der horizontalen Schenkel 15 und 17 angebracht ist. Ferner weisen die horizontalen Schenkel 15 und 17 Träger 25 auf.

Der Hubrahmen 12 ist bezüglich des Fahrzeugchassis 20 stufenlos mittels des Arbeitszylinders 26 verschwenkbar. Der Arbeitszylinder 26 ist an der Traverse 18 und an dem Fahrzeugchassis 20 befestigt. Bei Betätigung des Arbeitszylinders 26 ist ein Verschwenken des Hubrahmens 12 um die von den Stiften 22 gebildete Schwenkachse steuerbar möglich, wie dies zum Einkuppeln bestimmter Geräte oder deren Positionierung in die gewünschte Ruhe- oder Arbeitslage notwendig ist.

In den beiden vertikalen U-Profilen 14 und 16 des Hubrahmens 12 läßt sich ein zweiter Rahmen 28 bewegen, der im Falle des Ausführungsbeispiels im wesentlichen aus zwei Teilen besteht, nämlich einem in den beiden U-Profilen geführten Querjoch 30 und einer mit diesem fest verbundenen, vor den Profilen verlaufenden und diese seitlich überragenden Platte 32. Die für die Aufhängung bzw. Ankupplung einschließlich Antreiben der Arbeitsgeräte benötigten Elemente sind nun weitgehend in diesem zweiten Rahmen integriert. Man sieht hydraulische Schnellkuppelelemente 34, elektrische Schnellkuppelelemente 36, eine Gerätezapfwelle 38 sowie eine Anhängerkupplung 40 mit Zugmaul 42 und eine weitere tiefergelegene Einpunktkupplung 44. Die Gerätezapfwelle 38 ist in einer vorgegebenen Position insbesondere zur Dreipunktgerätekupplung 46 angeordnet.

Die Dreipunktgerätekupplung 46 ist im Falle des gezeigten Ausführungsbeispiels bezüglich ihres oberen Lenkers 48 bzw. ihres oberen Kupplungspunktes nicht mit dem zweiten Rahmen 28 integriert. Die zugehörigen unteren Lenker 49 und 50 sind über eine linke und rechte Hubstange 54 und 56 mit dem höhenverstellbaren zweiten Rahmen 28 verbunden und bezüglich ihres fahrzeugseitigen Endes am Schlepperrumpf befestigt. Im Falle des Ausführungsbeispiels geschieht diese Befestigung indirekt über die Schenkel 15 und 17 des Hubrahmens, jedoch ist auch eine eigene Aufhängung bzw. Achse am Fahrzeugchassis 20 denkbar. Gemäß Figur 1 sind die unteren Lenker 49 und 50 mittels Stiften 52 an den horizontalen Schenkeln 15 bzw. 17 befestigt. Die Hubstangen 54 und 56 sind mit den unteren Lenkern 49 und 50 mittels Stiften 58 und 59 verbunden. An ihren anderen Enden sind sie schwenkbar an den Stützen 60 und 62 des zweiten Rahmens befestigt.

Zum linken U-Profil des Hubrahmens 12 ist zu bemerken, daß dies zwecks deutlicherer Darstellung des oberen Lenkers 48 und dessen zugehöriger Betätigungsmechanik verkürzt dargestellt ist. Normalerweise sind beide U-Profile von gleicher Abmessung. An den U-Profilen 14 und 16 ist ebenso wie an der Arbeitsplatte 32 eine Reihe Löcher 74 bzw. 76 zu sehen; die Platte ist in Bezug auf die U-Profile mittels Bolzen 78 mechanisch verriegelt dargestellt. Der zweite Rahmen 28 ist auf diese Weise in verschiedenen vorgebbaren Höhenpositionen mechanisch gegenüber dem Hubrahmen 12 verriegelbar.

Schließlich ist noch auf die am Hubrahmen 12 befestigten Seitenbleche 64 und 66 zu verweisen, welche die Seitenbewegung der unteren Lenker 49 und 50 beeinflussen und zwar im gezeigten Falle derart, daß ab einer bestimmten Höhenposition des Arbeitsgerätes dieses durch Verspannen der unteren Lenker in seiner Seitenbewegung eingeschränkt bzw. blockiert wird.

Der zweite Rahmen 28 ist stufenlos innerhalb den U-Profilen 14 und 16 des Hubrahmens 12 mittels den beiden hydraulischen Zylindern 68 und 70 höhenverstellbar. Die Hydraulikzylinder 68 und 70 können an den vertikalen U-Profilen 14 und 16 mittels Bolzen 72 befestigt werden. Die Kolbenstange 73 der Hydraulikzylinder 68 und 70 ist mit dem zweiten Rahmen 28 verbunden. Die Platte 32 ist ferner mit einer weiteren Reihe Löcher 89 versehen, mittels denen weitere zusätzliche Geräte mit der Platte 32 verbunden werden können.

In Figur 2 ist die Seitenansicht der erfindungsgemäßen Vorrichtung dargestellt, bei der der verstellbare zweite Rahmen 28 über das in Figur 3 erkennbare Weiste-Dreieck 84 mit einer Gabelstapel-Einrichtung 82 lösbar verbunden ist.

Im Unterschied zu Figur 1 weist die in Figur 2 und Figur 3 dargestellte Vorrichtung keine Dreipunkt-Gerätekupplung 46 auf, sondern ist mit dem Schwenkarm 80 und der Gabelstapel-Einrichtung 82 verbunden. Der Schwenkarm 80 ist durch die Träger 25 mit den horizontalen Schenkeln 15 und 17 des Hubrahmens 12 verbunden, während die Gabelstapel-Einrichtung 82 mit dem zweiten Rahmen 28 mittels des Weiste-Dreiecks 84 verbunden ist. Der Schwenkarm 80 und die Gabelstapel-Einrichtung 82 können zusammen oder getrennt verwendet werden. Ferner ist in Figur 2 die Öldruckleitung 86, die elektrische Leitung 88 und die Kardanwelle 92 erkennbar, die das Fahrzeugchassis 20 mit dem zweiten Rahmen 28 verbinden. Die Öldruckleitung 86 führt zu dem hydraulischen Schnellkuppelelement 34, die elektrische Leitung 88 zu dem elektrischen Schnellkuppelelement 36 der Platte 32. Die mechanische Verbindung zwischen dem Fahrzeugchassis 20 und dem zweiten Rahmen 28 beinhaltet die Getriebewelle 90 und die Kardanwelle 92, die zu der Gerätezapfwelle 38 führt. Das Weiste-Dreieck 84 ist mittels Bolzen 94 an den Löchern 89 der Platte 32 befestigt. Die Kardanwelle 92 besitzt einen Längsausgleich. Die Öldruckleitung 86 dient zur Versorgung der Hydraulikzylinder 68 und 70 und der hydraulischen Schnellkuppelelemente 34.

## Patentansprüche

1. Kraftfahrzeug für industrielle und/oder landwirtschaftliche Arbeiten, insbesondere Ackerschlepper, mit einem an seinem Chassis befestigten und durch mindestens einen hydraulischen Arbeitszylinder (26) gesteuert verschwenkbaren, in seiner Normalposition etwa vertikal angeordneten Hubrahmen (12) sowie einem zweiten Hahmen (28), der entlang dem Hubrahmen (12) mittels eines vorzugsweise hydraulischen Kraftantriebes stufenlos höhenverstellbar ist und mindestens eine Kupplungseinrichtung trägt,
dadurch gekennzeichnet,
daß die für die Aufhängung bzw. Ankupplung einschließlich Antreiben der Arbeitsgeräte benötigten Elemente, nämlich Dreipunkt-Gerätekupplung (46), mindestens eine Anhängerkupplung (40) mit Zugmaul (42) sowie weitere mechanische (44), hydraulische (34) und elektrische (36) Schnellkuppelelemente und gegebenenfalls eine Gerätezapfwelle (38), in dem zweiten Rahmen (28) in einer vorbestimmten Position zueinander integriert sind und daß der zweite Rahmen (28) in vorgebbaren Höhenpositionen mechanisch gegenüber dem Hubrahmen verriegelbar ist.

2. Kraftfahrzeug nach Anspruch 1,
dadurch gekennzeichnet,
daß zusätzliche Mittel zum lösbaren Befestigen einer Schaufel und/oder Hubgabeln (82) an den zweiten Rahmen (28) vorgesehen sind.

3. Kraftfahrzeug nach Anspruch 1 oder 2,
dadurch gekennzeichnet,
daß die linke (54) und rechte (56) Hubstange für die Dreipunkt-Gerätekupplung am zweiten Rahmen (28) aufgehängt und der zugehörige linke (49) und rechte (50) untere Lenker bezüglich ihres fahrzeugseitigen Endes direkt oder indirekt über den Hubrahmen (12) am Schlepperrumpf befestigt sind.

4. Kraftfahrzeug nach Anspruch 3,
dadurch gekennzeichnet,
daß die Seitenbeweglichkeit der unteren Lenker (49, 50) durch am Hubrahmen (12) befestigte Seitenbleche (64, 66) begrenzt wird.

5. Kraftfahrzeug nach Anspruch 4,
dadurch gekennzeichnet,
daß die Seitenbleche (64, 66) eine Kontur aufweisen, welche die Seitenbewegung der unteren Lenker (49, 50) vorgebbar festlegt.

6. Kraftfahrzeug nach einem oder mehreren der Ansprüche 1 bis 5,
dadurch gekennzeichnet,
daß als mechanisches Schnellkuppelelement ein Weiste-Dreieck (84) am zweiten Rahmen (28) befestigt ist.

7. Kraftfahrzeug nach einem oder mehreren der Ansprüche 1 bis 6,
dadurch gekennzeichnet,
daß gegebenenfalls zusätzlich zu der ein Zugmaul (42) aufweisenden Anhängerkupplung (40) in einer tieferen Position am zweiten Rahmen (28) eine Einpunktkupplung (44) vorgesehen ist.

8. Kraftfahrzeug nach einem oder mehreren der Ansprüche 1 bis 7,
dadurch gekennzeichnet,
daß an einem der Rahmen (12, 28) ein Zugpendel mit Schwenkarm (80) lösbar anbringbar ist.

9. Kraftfahrzeug nach einem oder mehreren der Ansprüche 1 bis 8,
dadurch gekennzeichnet,
daß die am zweiten Rahmen (28) vorgesehene Zapfwelle (38) und Hydraulikanschlüsse von der Getriebewelle (90) über eine Kardanwelle (92) angetrieben bzw. von der Zentralhydraulik über eine Öldruckleitung (86) mit Energie versorgt sind.

## Claims

1. A motor vehicle for industrial and/or agricultural operations, in particular an agricultural tractor, ccmprising a lifting frame (12) which is fixed to its chassis and which is pivotable controlled by at least one hydraulic operating cylinder (26) and which is disposed substantially vertically in its normal position, and a second frame (28) which is steplessly displaceable heightwise along the lifting frame (12) by means of a preferably hydraulic power drive and which carries at least one coupling means, characterised in that the elements reguired for suspending or coupling including driving the working implements, namely a three-point implement coupling means (46), at least one trailer coupling (40) with towing jaw (42) and further mechanical (44), hydraulic (34) and electrical (36) rapid-action coupling elements and possibly an implement power take-off (38) are integrated in the second frame (28) in a predetermined position relative to each other and that the second frame (28) can be mechanically locked relative to the lifting frame at predeterninable positions in respect of height.

2. A motor vehicle according to claim 1 characterised in that additional means are provided for releasably fixing a bucket and/or lifting forks (82) to the second frame (28).

3. A motor vehicle according to claim 1 or claim 2 characterised in that the left-hand (54) and the right-hand (56) lifting bars for the three-point implement coupling are hung on the second frame (28) and the associated left-hand (49) and right-hand (50) lower links are fixed in regard to their end towards the vehicle to the body of the tractor directly or indirectly by way of the lifting frame (12).

4. A motor vehicle according to claim 3 characterised in that the lateral mobility of the lower links (49, 50) is limited by side plate members (64, 66) fixed to the lifting frame (12).

5. A motor vehicle according to claim 4 characterised in that the side plate members (64, 66) are of a contour which predeterminably fixes the lateral movement of the lower links (49, 50).

6. A motor vehicle according to one or more of claims 1 to 5 characterised in that a Weiste triangle (84) is fixed to the second frame (28), as the mechanical rapid-action coupling element.

7. A motor vehicle according to one or more of claims 1 to 6 characterised in that a one-point coupling (44) is possibly provided at a lower position on the second frame (28), in addition to the trailer coupling (40) having a towing jaw (42).

8. A motor vehicle according to one or more of claims 1 to 7 characterised in that a drawbar arrangement with pivot arm (80) can be releasably mounted to one of the frames (12, 28).

9. A motor vehicle according to one or more of claims 1 to 8 characterised in that the hydraulic connections and the take-off shaft (38), which are provided on the second frame (28), are respectively supplied with power from the central hydraulic system by way of an oil pressure line (86) and driven by the transmission shaft (90) by way of a cardan shaft (92).

## Revendications

1.- Véhicule à moteur pour travaux industriels et/ou agricoles, en particulier tracteur agricole, comportant un bâti de levage fixé sur le châssis du véhicule, monté de façon pivotante et commandé par au moins un cylindre hydraulique (26), et occupant normalement une position sensiblement verticale, ainsi qu'un second bâti (28) dont la position en hauteur est réglable de façon progressive le long du bâti de levage (12) au moyen d'un dispositif de préférence hydraulique relié à une source d'énergie, ce second bâti portant au moins un dispositif d'accouplement, caractérisé en ce que les éléments nécessaires à l'attelage ou à l'accouplement, y compris à l'entraînement des outils, notamment le système d'attelage trois points (46), au moins un attelage de remorque (40) avec mâchoire d'attelage (42), ainsi que d'autres éléments d'accouplement rapide de type mécanique (44), hydraulique (34) et électrique (36) et le cas échéant un arbre de prise de force (38) sont intégrés au second bâti (28) dans une position relative prédéterminée, et ence que le second bâti (28) peut être verrouillé mécaniquement par rapport au bâti de levage dans des positions en hauteur présélectables.

2.- Véhicule à moteur suivant la revendication 1, caractérisé en ce que des moyens additionnels sont prévus pour la fixation amovible d'un godet et/ou d'une fourche de levage (82) sur le second bâti (28).

3.- Véhicule à moteur suivant la revendication 1 ou 2, caractérisé en ce que les bras de relevage gauche (54) et droit (56) faisant partie du système d'attelage trois points sont suspendus au second bâti (28), les barres inférieures conjuguées gauche (49) et droite (50) étant fixées directement ou indirectement à l'arrière du tracteur par l'intermédiaire du bâti de levage (12) par leur extremité dirigée vers le véhicule.

4.- Véhicule à moteur suivant la revendication 3 caractérisé en ce que la mobilité latérale des barres inférieures (49, 50) est limitée par des tôles latérales (64, 66) fixées sur le bâti de levage (12).

5.- Véhicule à moteur suivant la revendication 4, caractérisé en ce que les tôles latérales (64, 66) présentent un contour définissant de façon présélectable le déplacement latéral des barres inférieures (49, 50).

6.- Véhicule à moteur suivant l'une quelconque des revendications 1 à 5, caractérisé en ce qu'un triangle de montage (84) est fixé sur le second bâti (28) pour servir d'elément d'accouplement mécanique rapide.

7.- Vehicule à moteur suivant l'une quelconque des revendications 1 à 6, caractérisé en ce qu'il est prévu le cas échéant, en plus de l'attelage pour remorque (40) comportant une mâchoire d'attelage (42), dans une position située plus bas sur le second bâti (28), un accouplement à un seul point d'attelage (44).

8.- Véhicule à moteur suivant l'une quelconque des revendications 1 à 7, caractérisé en ce qu'une flèche d'attelage ou un timon à bras pivotant (80) peut être adapté amoviblement sur l'un des bâtis (12, 28).

9.- Véhicule à moteur suivant l'une quelconque des revendications 1 à 8, caractérisé en ce que l'arbre de prise de force (38) prévu sur le second bâti (28) est entraîné à partir de l'arbre de boîte de vitesses (90) par l'intermédiaire d'un arbre à cardan (92) et en ce que les raccords hydrauliques sont alimentés en énergie à partir du système hydraulique principal par l'intermédiaire d'une conduite d'huile sous pression (86).

FIG. 1

FIG. 2

FIG. 3